# EUROPÄISCHE PATENTANMELDUNG

(11) **EP 3 511 204 A1**
(43) Veröffentlichungstag der Anmeldung: **17.07.2019**
(21) Anmeldenummer: 18151125.4
(22) Anmeldetag: 11.01.2018
(51) Int. Cl.: B60Q 1/076, B60Q 1/068

(54) **EINSTELLSYSTEM ZUM VERSCHWENKEN ZUMINDEST EINES OPTISCH RELEVANTEN BAUTEILS EINES FAHRZEUGSCHEINWERFERS UM EINE ERSTE UND EINE ZWEITE ACHSE**

(71) Anmelder: ZKW Group GmbH, 3250 Wieselburg (AT)
(72) Erfinder: Berger, Martin, 3661 Artstetten (AT)
(74) Vertreter: Patentanwaltskanzlei Matschnig & Forsthuber OG

(57) **Zusammenfassung**

Die Erfindung betrifft ein Einstellsystem (1) zum Verschwenken zumindest eines optisch relevanten Bauteils (2) eines Fahrzeugscheinwerfers um eine erste und eine zweite Achse (y, z), umfassend ein erstes Halteelement (3) zur Halterung des optisch relevanten Bauteils (2), ein zweites Halteelement (4) zur verschiebbaren Halterung des ersten Halteelements (3) an dem zweiten Halteelement (4), einen Tragrahmen (5) zur verschiebbaren Halterung des zweiten Halteelements (4) an dem Tragrahmen (5), sowie eine an dem ersten Halteelement (3) angreifende erste Verstelleinrichtung (6) zur Verschiebung des ersten Halteelements (3) in Bezug auf das zweite Halteelement (4), und eine an dem zweiten Halteelement (4) angreifende zweite Verstelleinrichtung (7) zur Verschiebung des zweiten Halteelements (4) in Bezug auf den Tragrahmen (5).

## Beschreibung

Die Erfindung betrifft ein Einstellsystem zum Verschwenken zumindest eines optisch relevanten Bauteils eines Fahrzeugscheinwerfers um eine erste und eine zweite Achse. Weiters betrifft die Erfindung eine Beleuchtungsvorrichtung für einen Kraftfahrzeugscheinwerfer, umfassend ein erfindungsgemäßes Einstellsystem. Zudem betrifft die Erfindung einen Fahrzeugscheinwerfer, insbesondere Kraftfahrzeugscheinwerfer, mit einem erfindungsgemäßen Einstellsystem und/oder einer erfindungsgemäßen Beleuchtungsvorrichtung.

Einstellsysteme sind aus dem Stand der Technik bekannt und werden bei Fahrzeugscheinwerferanwendungen häufig eingesetzt, um die vertikale Auslenkung (beispielsweise Leuchtweitenregulierung) oder die horizontale Auslenkung (Grundeinstellung oder beispielsweise Kurvenlicht) einer Lichtverteilung einzustellen.

Ein solches Einstellsystem ist beispielsweise aus der AT 513918 B1 bekannt geworden. Einstellsysteme sollen einerseits eine zuverlässige Verstellung eines optisch relevanten Bauteils ermöglichen, andererseits soll der Platzbedarf solcher Einstellsysteme minimiert werden, um die Konzeption eines Fahrzeugscheinwerfers möglichst wenig einzuschränken.

Bisherige Einstellsysteme weisen zumeist ein Verstelldreieck mit einem Fixlagerpunkt und zwei Angriffspunkten auf, wobei durch die Verbindung aus Fixlagerpunkt und dem Angriffspunkt je eine Achse ausgebildet wird, und durch Verschieben der Angriffspunkte eine Verschwenkbewegung erzeugt wird. Solche Einstellsysteme weisen einen aufgrund der Ausbildung des Schwenkdreiecks gewissen Platzbedarf auf.

Es ist daher eine Aufgabe der Erfindung ein Einstellsystem zu schaffen, das einen verringerten Platzbedarf aufweist. Diese Aufgabe wird mit einem Einstellsystem der eingangs genannten Art gelöst, das erfindungsgemäß folgende Merkmale aufweist, nämlich ein erstes Halteelement zur Halterung des optisch relevanten Bauteils, ein zweites Halteelement zur verschiebbaren Halterung des ersten Halteelements an dem zweiten Halteelement, einen Tragrahmen zur verschiebbaren Halterung des zweiten Halteelements an dem Tragrahmen, sowie eine an dem ersten Halteelement angreifende erste Verstelleinrichtung zur Verschiebung des ersten Halteelements in Bezug auf das zweite Halteelement, und eine an dem zweiten Halteelement angreifende zweite Verstelleinrichtung zur Verschiebung des zweiten Halteelements in Bezug auf den Tragrahmen, wobei das erste Halteelement und das zweite Halteelement eine miteinander in Eingriff stehende erste Gruppe an Führungsmittel aufweisen, mittels welcher ersten Gruppe an Führungsmittel eine Verschiebung des ersten Haltelements um das zweite Halteelement entlang eines Kreisbogens um die erste Achse geführt ist, und wobei das zweite Halteelement und der Tragrahmen eine miteinander in Eingriff stehende zweite Gruppe an Führungsmittel aufweisen, mittels welcher zweiten Gruppe an Führungsmittel eine Verschiebung des zweiten Halteelements in Bezug auf den Tragrahmen entlang eines Kreisbogens um die zweite Achse geführt ist, wobei die erste und die zweite Achse normal zueinander orientiert sind.

Durch die Abkehr von einem klassischen Aufbau mit Verstellarmen und Lagerpunkten, die ein Verstelldreieck ausbilden, und stattdessen den erfindungsgemäßen Ersatz von entlang Kreisbögen verschiebbarer Halteelemente kann das Bauvolumen eines Einstellssystems deutlich reduziert werden. Das erfindungsgemäße Einstellsystem erlaubt die Verstellung entlang eines Kalottenkreisbogens.

Die Kreisbögen sind dabei dergestalt gewählt, dass die zugehörigen Drehachsen innerhalb oder - gemessen an einer Hauptabstrahlrichtung - am Scheitelpunkt oder außerhalb des optisch relevanten Bauteils in einem in Lichtabstrahlrichtung nach dem optisch relevanten Bauteil angeordneten Bereich liegen.

Als optisch relevante Bauteile werden insbesondere Blenden, Lichtquellen, insbesondere LED und/oder Laserlichtquellen, Reflektoren, Linsen und/oder ganze Lichtmodule bzw. Baugruppen, etc. angesehen. Es können daher einzelne oder eine Mehrzahl dieser genannten Komponenten das optisch relevante Bauteil ausbilden, welches mit Hilfe des Einstellsystems einstellbar ist.

Insbesondere kann vorgesehen sein, dass die erste Achse horizontal und die zweite Achse vertikal orientiert ist. Die Angaben bezüglich der Orientierung beziehen sich dabei auf den eingebauten Zustand des Einstellsystems. Über die horizontale Achse kann beispielsweise die Leuchtweite eines Fahrzeugscheinwerfers geregelt werden. Mittels der vertikalen Achse kann das Lichtbild eines Fahrzeugscheinwerfers seitlich verschwenkt werden.

Alternativ dazu kann vorgesehen sein, dass die erste Achse vertikal und die zweite Achse horizontal orientiert ist.

Insbesondere kann vorgesehen sein, dass das optisch relevante Bauteil ein Abbildungsoptikelement umfasst. Unter einem Abbildungsoptikelement wird im Rahmen dieser Offenbarung jedes optische Element verstanden, mittels dem eine Lichtverteilung abschließend geformt wird. Dabei kann es sich beispielsweise um einen Reflektor handeln. In den meisten Fällen wird zur abschließenden Lichtformung allerdings eine Linse, insbesondere eine Projektionslinse, vorgesehen sein.

Günstigerweise kann das Einstellsystem dergestalt ausgelegt sein, dass das Abbildungsoptikelement eine Hauptabstrahlrichtung aufweist, die in einer Mittenstellung normal zur ersten und zweiten Achse orientiert ist. Hierzu kann vorgesehen sein, dass das Abbildungsoptikelement eine Hauptabstrahlrichtung entlang einer optischen Achse aufweist, wobei das Abbildungsoptikelement dergestalt um die erste und die zweite Achse schwenkbar ist, dass die optische Achse normal auf die erste und zweite Achse orientierbar ist.

Insbesondere kann vorgesehen sein, dass das Abbildungsoptikelement eine Linse, insbesondere eine Projektionslinse ist.

Zudem kann vorgesehen sein, dass die erste und die zweite Achse einander schneiden. Dadurch ist es möglich, dass das optisch relevante Bauteil ausschließlich um einen einzigen Punkt geschwenkt wird - nämlich den Schnittpunkt der beiden Achsen.

Insbesondere kann vorgesehen sein, dass das Abbildungsoptikelement, insbesondere eine Projektionslinse, einen Scheitelpunkt aufweist, wobei die erste und die zweite Achse einander im Bereich des Scheitelpunkts schneiden. Dadurch entsteht der besondere Vorteil, dass eine Schwenkbewegung ausschließlich um den Scheitelpunkt des Abbildungsoptikelements erfolgt. Eine Schwenkbewegung führt in diesem Fall dazu, dass diese lediglich die Orientierung des Scheitelpunkts, nicht aber dessen Position verändert. Da der Scheitelpunkt des Abbildungsoptikelements in einem Fahrzeugscheinwerfergehäuse typischerweise jenes Bauteil ist, das am weitesten in Richtung einer Abdeckscheibe hervorragt, ist diese Eigenschaft besonders von Vorteil, da der Scheitelpunkt bei einer Schwenkbewegung positionsstabil bleibt und damit der Platzbedarf des Abbildungsoptikelements trotz Schwenkbarkeit minimal ist. Wie bereits erwähnt, liegt der Scheitelpunkt in Richtung der optischen Achse des Abbildungsoptikelement an dessen Scheitel, wobei der Ausdruck "im Bereich" bedeutet, dass danach getrachtet wird, den Schnittpunkt der Achsen im Wesentlichen mit dem Scheitelpunkt zusammenfallen zu lassen, Abweichungen von einigen Millimetern allerdings eintreten können.

Vorteilhafterweise kann vorgesehen sein, dass die erste Gruppe an Führungsmittel zumindest einen kreisbogenförmigen Aufnahmeabschnitt aufweist, in dem zumindest ein der ersten Gruppe an Führungsmittel ebenso zugeordneter korrespondierender Führungsvorsprung aufgenommen ist, wobei der Aufnahmeabschnitt dem zweiten Halteelement zugeordnet ist und der Führungsvorsprung dem ersten Halteelement zugeordnet ist oder umgekehrt. Dadurch kann auf effiziente Weise eine Führung entlang eines Kreisbogens realisiert werden.

An dieser Stelle sei darauf hingewiesen, dass sämtliche der genannten Kreisbögen jeweils einen Abschnitt einer Kreisbahn ausbilden, wobei sich die Kreisbögen über einen Winkel von beispielsweise zwischen 2° und 45°, insbesondere zwischen 5 und 20°, besonders bevorzugt zwischen 7 und 15°, erstrecken können.

Zudem kann vorgesehen sein, dass an dem zweiten Halteelement eine Drehwelle gelagert ist, die parallel zur ersten Achse orientiert ist und zumindest einen verzahnten Abschnitt aufweist, wobei das erste Halteelement eine korrespondierende Verzahnung aufweist, mittels der das erste Halteelement auf dem zweiten Halteelement abgestützt ist, wobei die Verzahnung des ersten Halteelements dergestalt mit dem verzahnten Abschnitt in Eingriff steht, dass ein Verschwenken des ersten Halteelements um die erste Achse eine Drehbewegung der Drehwelle bewirkt. Die Drehwelle stützt damit das erste Halteelement und verhindert Bewegungsspiel des zugehörigen Verschwenkapparats.

Vorteilhafterweise kann vorgesehen sein, dass die zweite Gruppe an Führungsmittel zumindest einen kreisbogenförmigen Aufnahmeabschnitt aufweist, in dem zumindest ein der zweiten Gruppe an Führungsmittel ebenso zugeordneter korrespondierender Führungsvorsprung aufgenommen ist, wobei der Aufnahmeabschnitt dem Tragrahmen zugeordnet ist und der Führungsvorsprung dem zweiten Halteelement zugeordnet ist oder umgekehrt. Dadurch kann auf effiziente Weise eine Führung entlang eines Kreisbogens realisiert werden.

Zudem kann vorgesehen sein, dass an dem Tragrahmen eine Drehwelle gelagert ist, die parallel zur zweiten Achse orientiert ist und zumindest einen verzahnten Abschnitt aufweist, wobei das zweite Halteelement eine korrespondierende Verzahnung aufweist, mittels der das zweite Halteelement auf dem Tragrahmen abgestützt ist, wobei die Verzahnung des zweiten Halteelements dergestalt mit dem verzahnten Abschnitt in Eingriff steht, dass ein Verschwenken des zweiten Halteelements um die zweite Achse eine Drehbewegung der Drehwelle bewirkt. Die Drehwelle stützt damit das zweite Halteelement und verhindert Bewegungsspiel des zugehörigen Verschwenkapparats.

Zum Schwenken um eine horizontale Achse in einer Führungsbahn verschiebbar gehalten, wobei die Führungsbahn als Kreisbogen ausgebildet ist, dessen Mittelpunkt die Drehachse bildet, wobei die Drehachse horizontal orientiert ist und den Scheitelpunkt der Projektionslinse schneidet.

Insbesondere kann vorgesehen sein, dass die erste Verstelleinrichtung dazu eingerichtet ist, ortsfest mit einem Fahrzeug-Scheinwerfergehäuse fest verbunden zu werden, wobei die erste Verstelleinrichtung einen Verschwenkarm aufweist, der mittels der ersten Verstelleinrichtung um eine Achse schwenkbar ist, die parallel zur ersten Achse orientiert ist, wobei der Verschwenkarm einen Kopplungsabschnitt aufweist, der dazu eingerichtet ist, in einen korrespondierenden Kopplungsabschnitt des ersten Haltelements zum Verschwenken des ersten Halteelements um die erste Achse einzugreifen, wobei die Kopplungsabschnitte dazu eingerichtet sind, eine Schwenkbewegung des Verschwenkarms kraftschlüssig auf das erste Halteelement zu übertragen, wobei die Kopplungsabschnitte relativ zueinander verschiebbar sind. Die Kopplungsabschnitte können dabei in Richtung der ersten Achse sowie quer dazu verschiebbar ausgebildet sein.

Zudem kann vorgesehen sein, dass die zweite Verstelleinrichtung dazu eingerichtet ist, ortsfest mit einem Fahrzeugscheinwerfergehäuse fest verbunden zu werden, wobei die zweite Verstelleinrichtung einen Schiebearm aufweist, der mittels der zweiten Verstelleinrichtung in Richtung der ersten Achse verschiebbar ist, wobei der Schiebearm einen Kopplungsabschnitt aufweist, der dazu eingerichtet ist, in einen korrespondierenden Kopplungsabschnitt des zweiten Haltelements zum Verschwenken des zweiten Halteelements um die zweite Achse einzugreifen, wobei die Kopplungsabschnitte dazu eingerichtet sind, eine Schiebebewegung des Schiebearms kraftschlüssig auf das zweite Halteelement zu übertragen.

Das Verstellen des optisch relevanten Bauteils mittels der ersten Verstelleinrichtung erfolgt unabhängig von einem Verstellen mittels der zweiten Verstelleinrichtung. D.h. die Verstelleinrichtungen funktionieren unabhängig voneinander. Beide Verstelleinrichtungen sollen einander nicht beeinflussen - bei vertikaler Verstellung kann z.B. die horizontale Abweichung maximal z.B. 0,7° sein.

Ferner betrifft die Erfindung eine Beleuchtungsvorrichtung für einen Kraftfahrzeugscheinwerfer, umfassend ein erfindungsgemäßes Einstellsystem sowie ein optisch relevantes Bauteil. Die Beleuchtungsvorrichtung kann ferner zumindest eine Lichtquelle oder auch mehrere Lichtquellen enthalten, wobei dabei beispielsweise LED-Lichtquellen, Halogenlichtquellen und/oder Laserlichtquellen vorgesehen sein können.

Zudem betrifft die Erfindung einen Fahrzeugscheinwerfer, insbesondere Kraftfahrzeugscheinwerfer, mit einem erfindungsgemäßen Einstellsystem oder einer erfindungsgemäßen Beleuchtungsvorrichtung. Außerdem betrifft die Erfindung ein Fahrzeug, insbesondere ein Kraftfahrzeug, mit zumindest einem erfindungsgemäßen Fahrzeugscheinwerfer.

Das erfindungsgemäße Einstellsystem ist zur Einstellung einer Vielzahl unterschiedlicher Lichtverteilungen und Lichtsysteme einsetzbar. Beispielsweise kann ein solches Einstellsystem für Kurvenlicht, Abblendlicht, Fernlicht, Laserscanner, Led-Matrix-Scheinwerfer usw. eingesetzt werden.

Die Erfindung ist im Folgenden anhand beispielhafter und nicht einschränkender Ausführungsformen näher erläutert, die in den Figuren veranschaulicht sind. Darin zeigt
Figur 1 eine perspektivische Darstellung einer ersten Ausführungsform eines erfindungsgemäßen Einstellsystems,
Figur 2 eine weitere perspektivische Darstellung des Einstellsystems gemäß Fig. 1,
Figur 3 eine perspektivische Darstellung einzelner Komponenten des Einstellsystems gemäß Fig. 1 und 2,
Figur 4 eine Seitenansicht auf das Einstellsystem gemäß Fig. 1 bis 3,
Figur 5 eine Unteransicht auf das Einstellsystem gemäß Fig. 1 bis 4,
Figur 6 eine Explosionsdarstellung des Einstellsystems gemäß Fig. 1 bis 5,
Figur 7 eine perspektivische Darstellung des horizontalen Schwenkmechanismus des Einstellsystems gemäß Fig. 1 bis 6,
Figuren 8a und 8b Detaildarstellungen eines Schwenkarmes aus Figur 7,
Figuren 9a bis 9g einzelne Schritte der Montage des Einstellsystems gemäß Fig. 1 bis 8b, und
Figur 10 eine alternative Ausführungsform eines erfindungsgemäßen Einstellsystems.

In den folgenden Figuren bezeichnen - sofern nicht anders angegeben - gleiche Bezugszeichen gleiche Merkmale.

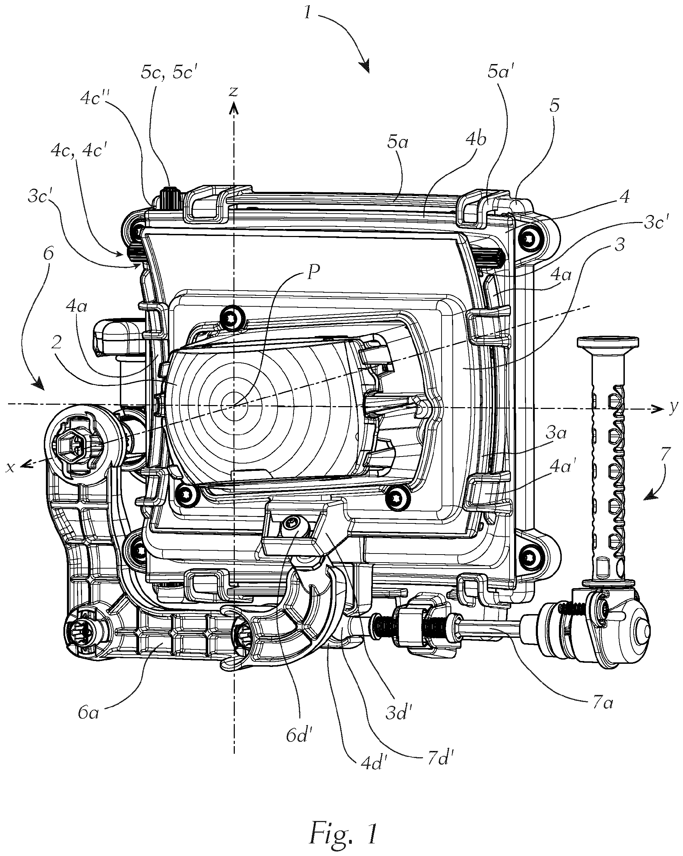

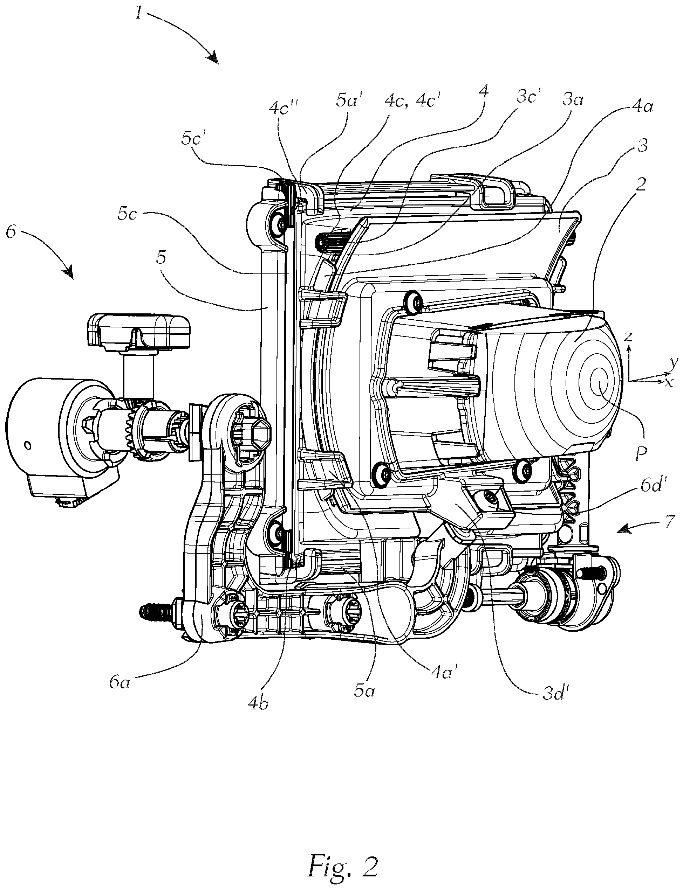

Figuren 1 und 2 zeigen unterschiedliche perspektivische Darstellungen einer ersten Ausführungsform eines erfindungsgemäßen Einstellsystems 1 zum Verschwenken zumindest eines optisch relevanten Bauteils 2 eines Fahrzeugscheinwerfers um eine erste und eine zweite Achse y und z.

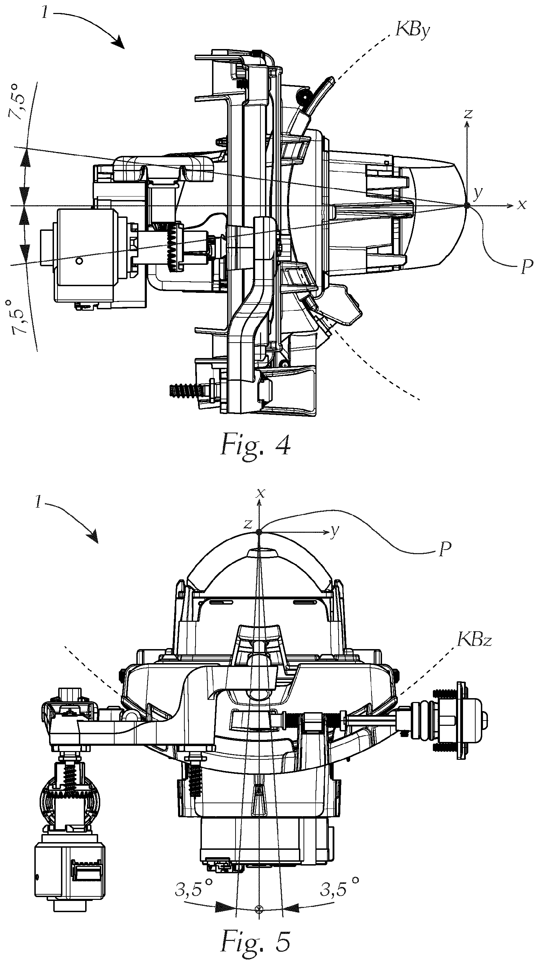

Das Einstellsystem 1 umfasst ein erstes Halteelement 3 zur Halterung des optisch relevanten Bauteils 2, ein zweites Halteelement 4 zur verschiebbaren Halterung des ersten Halteelements 3 an dem zweiten Halteelement 4, einen Tragrahmen 5 zur verschiebbaren Halterung des zweiten Halteelements 4 an dem Tragrahmen 5, sowie eine an dem ersten Halteelement 3 angreifende erste Verstelleinrichtung 6 zur Verschiebung des ersten Halteelements 3 in Bezug auf das zweite Halteelement 4. Ferner umfasst das Einstellsystem 1 eine an dem zweiten Halteelement 4 angreifende zweite Verstelleinrichtung 7 zur Verschiebung des zweiten Halteelements 4 in Bezug auf den Tragrahmen 5, wobei das erste Halteelement 3 und das zweite Halteelement 4 eine miteinander in Eingriff stehende erste Gruppe an Führungsmittel 3a und 4a aufweisen. Die erste Gruppe an Führungsmittel 3a, 4a führt eine Verschiebung des ersten Haltelements 3 um das zweite Halteelement 4 entlang eines Kreisbogens KBy (siehe Fig. 4) um die erste Achse y. Im vorliegenden Beispiel ist die erste Achse horizontal und normal zur Hauptfahrrichtung x eines Fahrzeugs orientiert, wobei die Hauptfahrrichtung x mit der ersten Achse y eine Ebene aufspannt, die normal zu einer vertikal orientierten zweiten Achse z orientiert ist. Alternativ dazu könnte ebenso die erste Achse y vertikal und die zweite Achse z horizontal orientiert sein.

Das zweite Halteelement 4 und der Tragrahmen 5 weisen eine miteinander in Eingriff stehende zweite Gruppe an Führungsmittel 4b und 5a auf, mittels welcher zweiten Gruppe an Führungsmittel 4b, 5a eine Verschiebung des zweiten Halteelements 4 in Bezug auf den Tragrahmen 5 entlang eines Kreisbogens KBz (siehe Fig. 5) um die zweite Achse z festgelegt ist. Die erste und die zweite Achse y und z sind dabei normal zueinander orientiert. Die Bögen sind dabei dergestalt ausgebildet, dass die jeweilige Achse mit den Mittelpunkt des jeweiligen Bogens zusammenfällt.

Die erste Gruppe an Führungsmittel 3a, 4a weist zumindest einen kreisbogenförmigen Aufnahmeabschnitt 4a auf, der durch eine Haltenase 4a' dergestalt begrenzt wird, dass ein in dem Aufnahmeabschnitt 4a aufgenommenes Führungsmittel 3a - das z.B. in Form eines Vorsprungs ausgebildet ist - im montierten Zustand ausschließlich um die Achse y verschwenkt werden kann und Verschiebungen in andere Richtungen möglichst verhindert werden. Zu diesem Zweck sind in der vorliegenden Ausführungsform vier Haltenasen 4a' vorgesehen, die an gegenüberliegenden Seiten des zweiten Haltemittels 4 ausgebildet sind. Figur 1 zeigt Haltenasen 4a' einer rechten Seite und Figur 2 Haltenasen 4a' einer linken Seite des Einstellsystems 1 (von vorne gesehen). Weiters ist in Figur 1 erkennbar, dass an dem zweiten Halteelement 4 eine Drehwelle 4c gelagert ist, die parallel zur ersten Achse y orientiert ist und zumindest einen verzahnten Abschnitt 4c' aufweist, wobei das erste Halteelement 3 eine korrespondierende Verzahnung 3c' aufweist, mittels der das erste Halteelement 3 auf dem zweiten Halteelement 4 abgestützt ist. Die Verzahnung 3c' des ersten Halteelements 3 steht dergestalt mit dem verzahnten Abschnitt 4c' in Eingriff, dass ein Verschwenken des ersten Halteelements 3 um die erste Achse y eine Drehbewegung der Drehwelle 4c bewirkt. Die Drehwelle 4c minimiert damit das Bewegungsspiel des ersten Halteelements 3 und sorgt für eine besonders zuverlässige Führung.

Analog zur ersten Gruppe kann auch eine zweite Gruppe an Führungsmittel vorgesehen sein. Die zweite Gruppe an Führungsmittel 4b und 5a weist zumindest einen kreisbogenförmigen Aufnahmeabschnitt 5a auf, in dem zumindest ein der zweiten Gruppe an Führungsmittel 4b und 5a ebenso zugeordneter korrespondierender Führungsvorsprung 4b aufgenommen ist. Der Aufnahmeabschnitt 5a ist dem Tragrahmen 5 zugeordnet und der Führungsvorsprung 4b ist dem zweiten Halteelement 4 zugeordnet (oder umgekehrt). An dem Tragrahmen 5 sind Haltenasen 5a' ausgebildet. Weiters ist an dem Tragrahmen 5 eine Drehwelle 5c gelagert, die parallel zur zweiten Achse z orientiert ist und zumindest einen verzahnten Abschnitt 5c' aufweist, wobei das zweite Halteelement 4 eine korrespondierende Verzahnung 4c" aufweist, mittels dem das zweite Halteelement 4 auf dem Tragrahmen 5 abgestützt ist. Die Verzahnung 4c" des zweiten Halteelements 4 steht dergestalt mit dem verzahnten Abschnitt 5c' in Eingriff, dass ein Verschwenken des zweiten Halteelements 4 um die zweite Achse z eine Drehbewegung der Drehwelle 5c bewirkt. Analog zur Drehwelle 4c bewirkt die Drehwelle 5c, dass das Spiel des Verschiebemechanismus minimiert wird.

In der vorliegenden Ausführungsform ist vorgesehen, dass das optisch relevante Bauteil 2 ein Abbildungsoptikelement umfasst, nämlich in Form einer Projektionslinse. Die Projektionslinse weist eine Hauptabstrahlrichtung entlang einer optischen Achse auf, wobei das Abbildungsoptikelement dergestalt um die erste und die zweite Achse y und z schwenkbar ist, dass die optische Achse normal auf die erste und zweite Achse y und z orientierbar ist. Anders ausgedrückt, bedeutet dies, dass die Kreisbögen 4a und 5a bzw. der gesamte Verstellmechanismus entsprechend ausgebildet sind. Wie in Figur 1 erkennbar ist, weist die Projektionslinse 2 einen Scheitelpunkt P auf, wobei die erste und die zweite Achse y und z einander im Bereich des Scheitelpunkts P schneiden.

Die erste Verstelleinrichtung 6 ist dazu eingerichtet, ortsfest mit einem Fahrzeugscheinwerfergehäuse fest verbunden zu werden, wobei die erste Verstelleinrichtung 6 einen Verschwenkarm 6a aufweist, der mittels der ersten Verstelleinrichtung 6 um eine Achse schwenkbar ist, die parallel zur ersten Achse y orientiert ist, wobei der Verschwenkarm 6a einen Kopplungsabschnitt 6d' aufweist, der dazu eingerichtet ist, in einen korrespondierenden Kopplungsabschnitt 3d' des ersten Haltelements 3 zum Verschwenken des ersten Halteelements 3 um die erste Achse y einzugreifen. Die Kopplungsabschnitte 6d' und 3d' sind dazu eingerichtet, eine Schwenkbewegung des Verschwenkarms kraftschlüssig auf das erste Halteelement 3 zu übertragen, wobei die Kopplungsabschnitte 6d' und 3d' relativ zueinander verschiebbar sind.

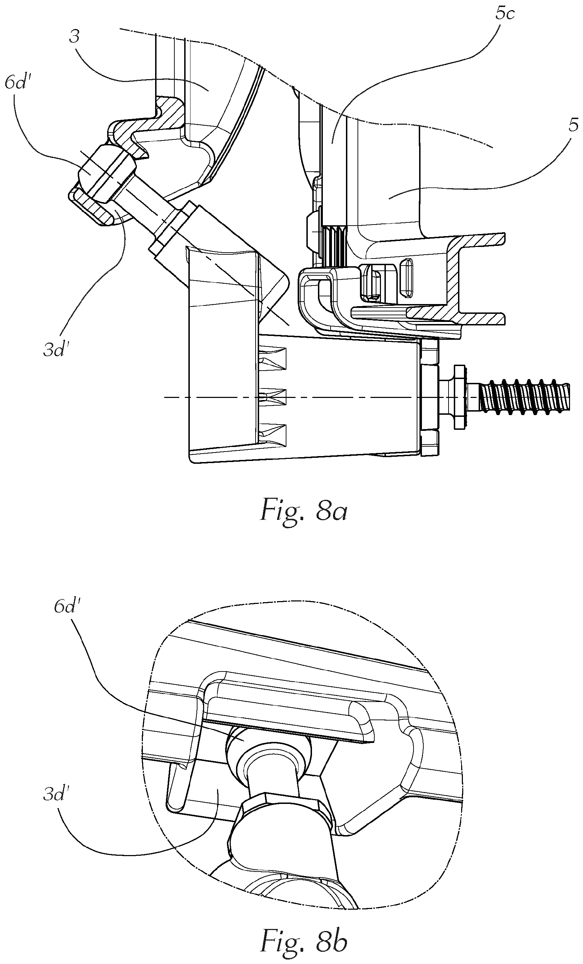

Das Zusammenwirken der Kopplungsabschnitte 6d' und 3d' ist in Figuren 8a und 8b näher dargestellt. Darin ist erkennbar, dass der Kopplungsabschnitt 6d' als Kugelkopf ausgebildet ist, der in einer entsprechend geformten Vertiefung 3d' aufgenommen ist, wobei sich der Kugelkopf innerhalb der Vertiefung dergestalt verschieben lässt, dass einerseits eine Verschwenkbewegung des Armes 6a kraftschlüssig auf das erste Haltelement 3 übertragen wird, andererseits eine durch die unterschiedlichen Schwenkachsen von Verschwenkarm 6a und erstem Haltelement 3 abweichende Bewegungsbahn ausgeglichen werden kann. Ebenso ist eine Verschiebung in Richtung der y-Achse möglich, die infolge eines Schwenkens des zweiten Halteelements 4 um die zweite Achse z bewirkt wird, da das erste Halteelement 3 gemeinsam mit dem zweiten Halteelement 4 bewegt wird.

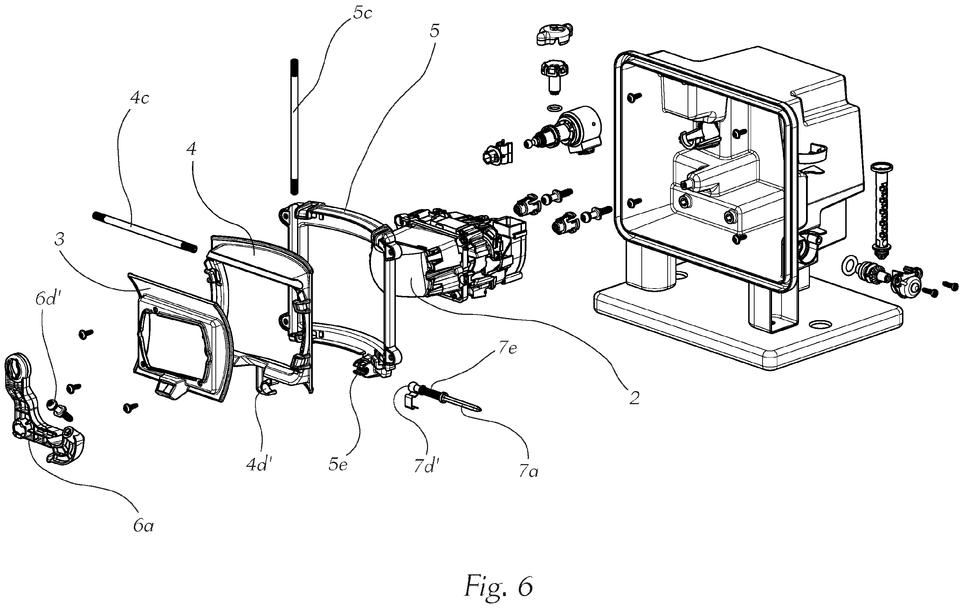

In Figur 1 und Figur 6 ist erkennbar, dass die zweite Verstelleinrichtung 7 des Einstellsystems 1 einen Schiebearm 7a aufweist, der mittels der zweiten Verstelleinrichtung 7 in Richtung der ersten Achse y verschiebbar ist, wobei der Schiebearm 7a einen Kopplungsabschnitt 7d' aufweist, der dazu eingerichtet ist, in einen korrespondierenden Kopplungsabschnitt 4d' des zweiten Haltelements 4 zum Verschwenken des zweiten Halteelements 4 um die zweite Achse z einzugreifen, wobei die Kopplungsabschnitte 4d' und 7d' dazu eingerichtet sind, eine Schiebebewegung des Schiebearms 7a kraftschlüssig auf das zweite Halteelement 4 zu übertragen. In der vorliegenden Ausführungsform ist dabei der Kopplungsabschnitt 7d' als Kugelkopf ausgeführt, der in eine korrespondierende zylindrische Aufnahmeöffnung 4d' eingreift, wobei die Längsachse der zylindrischen Aufnahmeöffnung normal auf die erste Achse y orientiert ist. Eine Längsverschiebung des Schiebearms 7a kann im vorliegenden Ausführungsbeispiel durch Drehung um seine Längsachse erzielt werden, da der Schiebearm 7a einen Gewindeabschnitt 7e aufweist, der an einem Gewindeabschnitt 5e des feststehenden Tragrahmens 5 angreift (siehe Fig. 6). Auf die Ausgestaltung der Verstellvorrichtungen 6 und 7 wird im Folgenden nicht näher eingegangen, da solche aus dem Stand der Technik hinreichend bekannt sind und im vorliegenden Fall lediglich dazu eingerichtet sein müssen, den Schiebearm 7a zu verschieben bzw. den Schwenkarm 6a zu verschwenken.

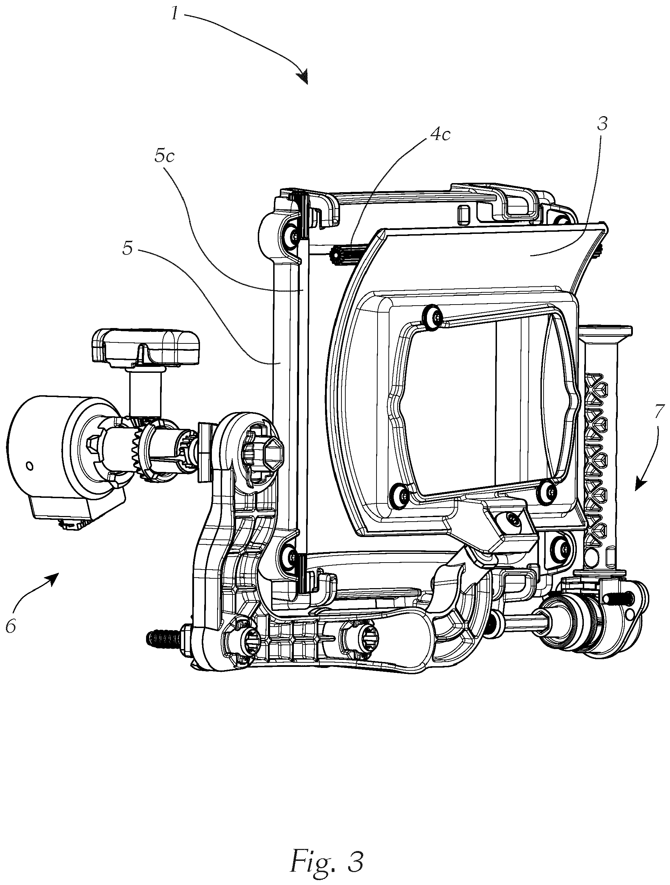

Die Figuren 3 bis 5 zeigen unterschiedliche Ansichten des Einstellsystems 1, wobei zur besseren Übersicht nur vereinzelte Bezugszeichen eingetragen wurden. In Figur 4 ist erkennbar, dass der beispielhafte vertikale Verstellbereich einen Winkel von +/- 7,5° ausgehend von einer Nullstellung umfasst. In Figur 5 ist erkennbar, dass der beispielhafte seitliche Verstellbereich einen Winkel von +/- 3,5° ausgehend von einer Nullstellung beträgt.

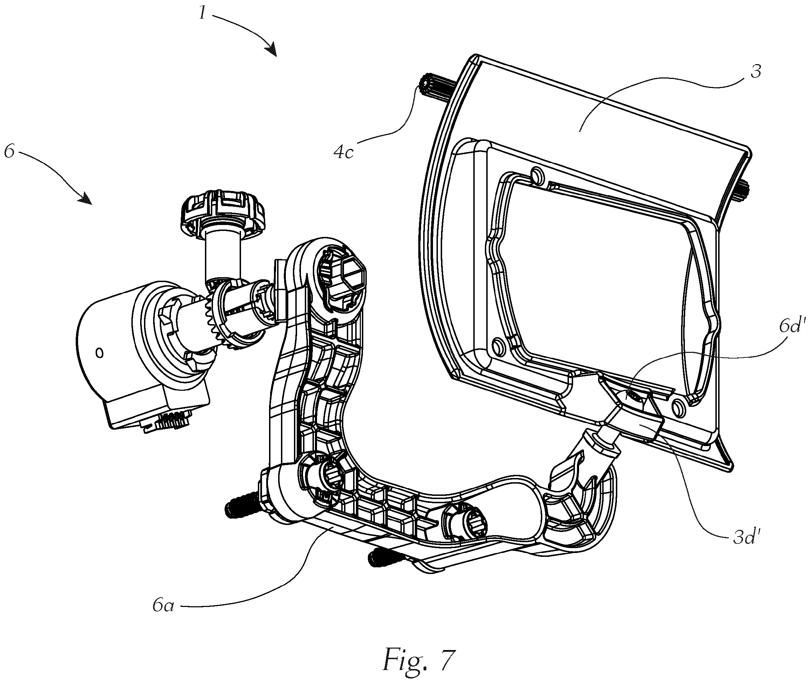

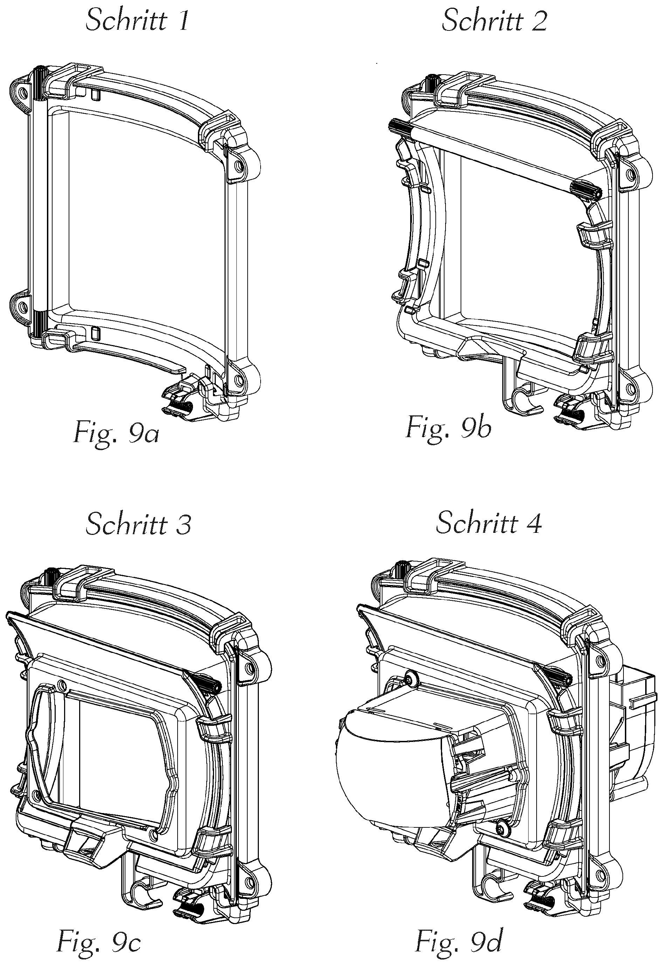

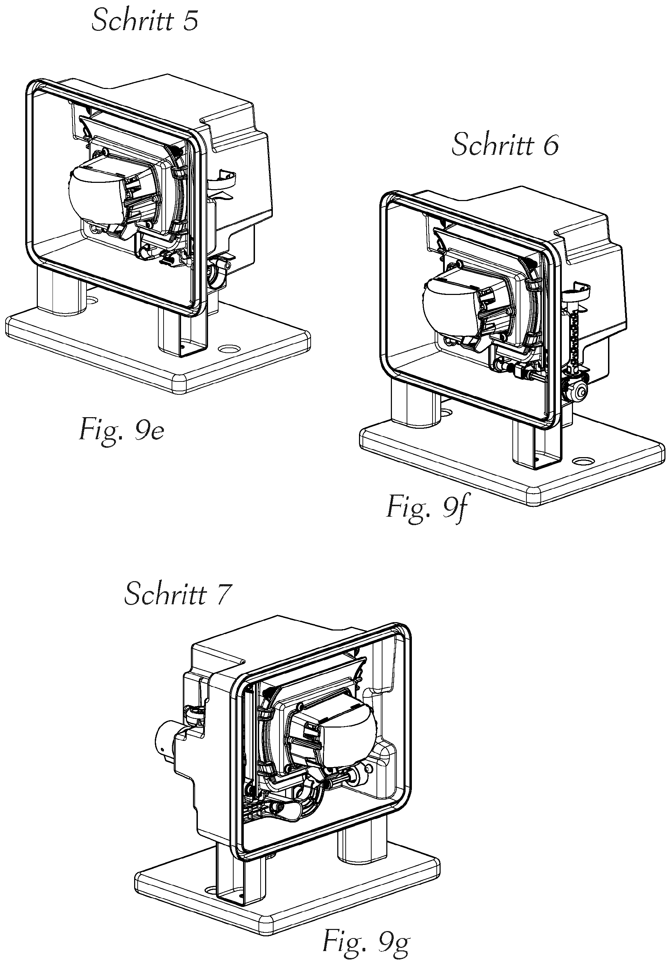

Figur 7 zeigt eine perspektivische Detaildarstellung des bereits beschriebenen horizontalen Schwenkmechanismus des Einstellsystems 1. Figuren 9a bis 9g zeigen einzelne Schritte der Montage des Einstellsystems gemäß Fig. 1 bis 8b, wobei zur besseren Übersicht darin keine Bezugszeichen dargestellt sind.

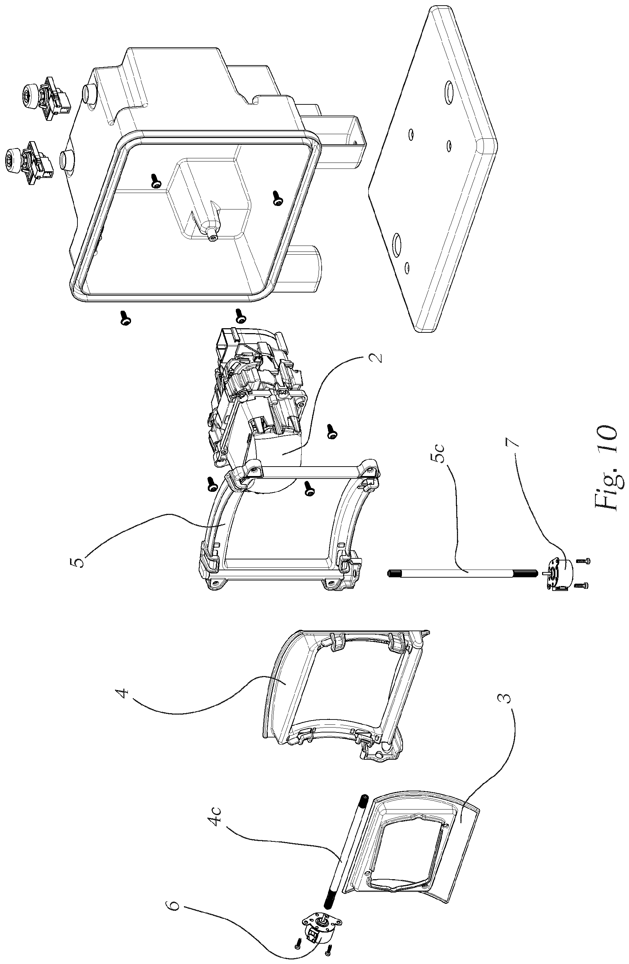

Figur 10 zeigt eine alternative Ausführungsform eines erfindungsgemäßen Einstellsystems 1. Darin sind die Verstelleinrichtungen 6 und 7 anders ausgebildet, nämlich als Stellmotoren, deren Drehachse direkt an der Drehwelle 4c bzw. 5c angreift.

Grundsätzlich ist die Erfindung für eine Vielzahl an unterschiedlichen Lichtfunktionen einsetzbar. Beispielhaft seien an dieser Stelle Kurvenlicht, Abblendlicht, Fernlicht, Laserscanner, LED-Matrix-Licht usw. genannt.

In Anbetracht dieser Lehre ist der Fachmann in der Lage, ohne erfinderisches Zutun zu anderen, nicht gezeigten Ausführungsformen der Erfindung zu gelangen. Die Erfindung ist daher nicht auf die gezeigten Ausführungsformen beschränkt. Auch können einzelne Aspekte der Erfindung bzw. der Ausführungsformen aufgegriffen und miteinander kombiniert werden. Wesentlich sind die der Erfindung zugrunde liegenden Gedanken, die durch einen Fachmann in Kenntnis dieser Beschreibung in mannigfaltiger Weise ausgeführt werden können und trotzdem als solche aufrechterhalten bleiben. Etwaige Bezugszeichen in den Ansprüchen sind beispielhaft und dienen nur der einfacheren Lesbarkeit der Ansprüche, ohne diese einzuschränken.

### Liste der Bezugszeichen:

- 1: Einstellsystem
- 2: Optisch relevanter Bauteil (Projektionslinse)
- 3: Erstes Halteelement
- 3a: Führungsmittel, erste Gruppe
- 3c': Verzahnung (korrespondierend zu 4c')
- 3d': Kopplungsabschnitt
- 4: Zweites Halteelement
- 4a: Führungsmittel, erste Gruppe
- 4a': Haltenase
- 4b: Führungsmittel, zweite Gruppe
- 4c: Drehwelle
- 4c': verzahnter Abschnitt (korrespondierend zu 3c')
- 4c": Verzahnung (korrespondierend zu 5c')
- 4d': Aufnahmeöffnung
- 5: Tragrahmen
- 5a: Führungsmittel, zweite Gruppe
- 5a': Haltenase
- 5c: Drehwelle
- 5c': verzahnter Abschnitt (korrespondierend zu 4c")
- 5e: Gewindeabschnitt
- 6: Erste Verstelleinrichtung
- 6a: Verschwenkarm
- 6d': Kopplungsabschnitt
- 7: Zweite Verstelleinrichtung
- 7a: Schiebearm
- 7d': Kopplungsabschnitt
- 7e: Gewindeabschnitt

## Patentansprüche

1. Einstellsystem (1) zum Verschwenken zumindest eines optisch relevanten Bauteils (2) eines Fahrzeugscheinwerfers um eine erste und eine zweite Achse (y, z), umfassend
- ein erstes Halteelement (3) zur Halterung des optisch relevanten Bauteils (2),
- ein zweites Halteelement (4) zur verschiebbaren Halterung des ersten Halteelements (3) an dem zweiten Halteelement (4),
- einen Tragrahmen (5) zur verschiebbaren Halterung des zweiten Halteelements (4) an dem Tragrahmen (5), sowie
- eine an dem ersten Halteelement (3) angreifende erste Verstelleinrichtung (6) zur Verschiebung des ersten Halteelements (3) in Bezug auf das zweite Halteelement (4), und
- eine an dem zweiten Halteelement (4) angreifende zweite Verstelleinrichtung (7) zur Verschiebung des zweiten Halteelements (4) in Bezug auf den Tragrahmen (5),
wobei das erste Halteelement (3) und das zweite Halteelement (4) eine miteinander in Eingriff stehende erste Gruppe an Führungsmittel (3a, 4a) aufweisen, mittels welcher ersten Gruppe an Führungsmittel (3a, 4a) eine Verschiebung des ersten Haltelements (3) um das zweite Halteelement (4) entlang eines Kreisbogens (KBy) um die erste Achse (y) geführt ist, und
wobei das zweite Halteelement (4) und der Tragrahmen (5) eine miteinander in Eingriff stehende zweite Gruppe an Führungsmittel (4b, 5a) aufweisen, mittels welcher zweiten Gruppe an Führungsmittel (4b, 5a) eine Verschiebung des zweiten Halteelements (4) in Bezug auf den Tragrahmen (5) entlang eines Kreisbogens (KBz) um die zweite Achse (z) geführt ist,
wobei die erste und die zweite Achse (y,z) normal zueinander orientiert sind.

2. Einstellsystem (1) nach Anspruch 1, wobei die erste Achse (y) horizontal und die zweite Achse (z) vertikal orientiert ist.

3. Einstellsystem (1) nach Anspruch 1, wobei die erste Achse vertikal und die zweite Achse horizontal orientiert ist.

4. Einstellsystem (1) nach einem der vorhergehenden Ansprüche, wobei das optisch relevante Bauteil (2) ein Abbildungsoptikelement umfasst.

5. Einstellsystem (1) nach Anspruch 4, wobei das Abbildungsoptikelement eine Hauptabstrahlrichtung entlang einer optischen Achse aufweist, wobei das Abbildungsoptikelement dergestalt um die erste und die zweite Achse (y, z) schwenkbar ist, dass die optische Achse normal auf die erste und zweite Achse (y, z) orientierbar ist.

6. Einstellsystem (1) nach Anspruch 4 oder 5, wobei das Abbildungsoptikelement eine Linse, insbesondere eine Projektionslinse ist.

7. Einstellsystem (1) nach einem der vorhergehenden Ansprüche, wobei die erste und die zweite Achse (y, z) einander schneiden.

8. Einstellsystem (1) nach einem der Ansprüche 4 bis 6, wobei das Abbildungsoptikelement, insbesondere eine Projektionslinse, einen Scheitelpunkt (P) aufweist, wobei die erste und die zweite Achse (y, z) einander im Bereich des Scheitelpunkts (P) schneiden.

9. Einstellsystem (1) nach einem der vorhergehenden Ansprüche, wobei die erste Gruppe an Führungsmittel (3a, 4a) zumindest einen kreisbogenförmigen Aufnahmeabschnitt (4a) aufweist, in dem zumindest ein der ersten Gruppe an Führungsmittel (3a, 4a) ebenso zugeordneter korrespondierender Führungsvorsprung (3a) aufgenommen ist, wobei der Aufnahmeabschnitt (4a) dem zweiten Halteelement (4) zugeordnet ist und der Führungsvorsprung (3a) dem ersten Halteelement (3) zugeordnet ist oder umgekehrt.

10. Einstellsystem (1) nach Anspruch 9, wobei an dem zweiten Halteelement (4) eine Drehwelle (4c) gelagert ist, die parallel zur ersten Achse (y) orientiert ist und zumindest einen verzahnten Abschnitt (4c') aufweist, wobei das erste Halteelement (3) eine korrespondierende Verzahnung (3c') aufweist, mittels dem das erste Halteelement (3) auf dem zweiten Halteelement (4) abgestützt ist, wobei die Verzahnung (3c') des ersten Halteelements (3) dergestalt mit dem verzahnten Abschnitt (4c') in Eingriff steht, dass ein Verschwenken des ersten Halteelements (3) um die erste Achse (y) eine Drehbewegung der Drehwelle (4c) bewirkt.

11. Einstellsystem (1) nach einem der vorhergehenden Ansprüche, wobei die zweite Gruppe an Führungsmittel (4b, 5a) zumindest einen kreisbogenförmigen Aufnahmeabschnitt (5a) aufweist, in dem zumindest ein der zweiten Gruppe an Führungsmittel (4b, 5a) ebenso zugeordneter korrespondierender Führungsvorsprung (4b) aufgenommen ist, wobei der Aufnahmeabschnitt (5a) dem Tragrahmen (5) zugeordnet ist und der Führungsvorsprung (4b) dem zweiten Halteelement (4) zugeordnet ist oder umgekehrt.

12. Einstellsystem (1) nach Anspruch 11, wobei an dem Tragrahmen (5) eine Drehwelle (5c) gelagert ist, die parallel zur zweiten Achse (z) orientiert ist und zumindest einen verzahnten Abschnitt (5c') aufweist, wobei das zweite Halteelement (4) eine korrespondierende Verzahnung (4c") aufweist, mittels dem das zweite Halteelement (4) auf dem Tragrahmen (5) abgestützt ist, wobei die Verzahnung (4c") des zweiten Halteelements (4) dergestalt mit dem verzahnten Abschnitt (5c') in Eingriff steht, dass ein Verschwenken des zweiten Halteelements (4) um die zweite Achse (z) eine Drehbewegung der Drehwelle (5c) bewirkt.

13. Einstellsystem (1) nach einem der vorhergehenden Ansprüche, wobei die erste Verstelleinrichtung (6) dazu eingerichtet ist, ortsfest mit einem Fahrzeugscheinwerfergehäuse fest verbunden zu werden, wobei die erste Verstelleinrichtung (6) einen Verschwenkarm (6a) aufweist, der mittels der ersten Verstelleinrichtung (6) um eine Achse schwenkbar ist, die parallel zur ersten Achse (y) orientiert ist, wobei der Verschwenkarm (6a) einen Kopplungsabschnitt (6d') aufweist, der dazu eingerichtet ist, in einen korrespondierenden Kopplungsabschnitt (3d') des ersten Haltelements (3) zum Verschwenken des ersten Halteelements (3) um die erste Achse (y) einzugreifen, wobei die Kopplungsabschnitte (3d' und 6d') dazu eingerichtet sind, eine Schwenkbewegung des Verschwenkarms (6a) kraftschlüssig auf das erste Halteelement (3) zu übertragen, wobei die Kopplungsabschnitte (3d' und 6d') relativ zueinander verschiebbar sind.

14. Einstellsystem (1) nach einem der vorhergehenden Ansprüche, wobei die zweite Verstelleinrichtung (7) dazu eingerichtet ist, ortsfest mit einem Fahrzeugscheinwerfergehäuse fest verbunden zu werden, wobei die zweite Verstelleinrichtung (7) einen Schiebearm (7a) aufweist, der mittels der zweiten Verstelleinrichtung (7) in Richtung der ersten Achse (y) verschiebbar ist, wobei der Schiebearm (7a) einen Kopplungsabschnitt (7d') aufweist, der dazu eingerichtet ist, in einen korrespondierenden Kopplungsabschnitt (4d') des zweiten Haltelements (4) zum Verschwenken des zweiten Halteelements (4) um die zweite Achse (z) einzugreifen, wobei die Kopplungsabschnitte (4d' und 7d') dazu eingerichtet sind, eine Schiebebewegung des Schiebearms (7a) kraftschlüssig auf das zweite Halteelement (4) zu übertragen.

15. Beleuchtungsvorrichtung für einen Kraftfahrzeugscheinwerfer, umfassend ein Einstellsystem (1) nach einem der vorhergehenden Ansprüche sowie ein optisch relevantes Bauteil, und/oder Fahrzeugscheinwerfer, insbesondere Kraftfahrzeugscheinwerfer, mit einem Einstellsystem (1) oder einer Beleuchtungsvorrichtung, umfassend ein Einstellsystem (1) nach einem der vorhergehenden Ansprüche sowie ein optisch relevantes Bauteil.
